# EUROPÄISCHE PATENTANMELDUNG

(11) **EP 0 963 709 A2**
(43) Veröffentlichungstag der Anmeldung: **15.12.1999**
(21) Anmeldenummer: 99110196.5
(22) Anmeldetag: 26.05.1999
(51) Int. Cl.: A24C 5/39

(54) **Verfahren und Vorrichtung zum Entleeren von mit Schüttgut, insbesondere Schnittabak gefüllten Kartons**

(30) Priorität: 06.06.1998 DE 19825425
(71) Anmelder: Hauni Maschinenbau AG, 21033 Hamburg (DE)
(72) Erfinder: Christ, Horst-Udo, 22359 Hamburg (DE); Peitz, Bernd, 48308 Senden (DE)

(57) **Zusammenfassung**

Die Erfindung betrifft das Entleeren von Schnittabak enthaltenden Kartons, die in geöffnetem Zustand durch einen Manipulator von einer Zuführbahn abgenommen und zu einem Sammeltransporteur überführt werden.
Es ist das Ziel, die mit der Entleerung einhergehende Staubentwicklung zu reduzieren.
Erreicht wird dies durch eine schaufelförmige Abdeckung (17, 18) an der Kartonaufnahme (9) des Manipulators (1) über der Kartonöffnung, die beim Kippen des Kartons (4) um 180° den Tabak zunächst auffängt und unmittelbar über dem Sammeltransporteur durch Öffnung der Schaufeln (17, 18) freigibt.
Die geringe Fallhöhe des Tabaks verhindert eine übermäßige Staubentwicklung und schont die Tabakfasern.

## Beschreibung

Die Erfindung betrifft ein Verfahren zum Entleeren von mit Schüttgut, insbesondere Schnittabak gefüllten Kartons, welche in oberseitig geäffnetem Zustand von einer Zuführbahn zu einem Sammeltransporteur überführt und nach unten in diesen entleert werden.

Die Erfindung betrifft außerdem eine Vorrichtung zum Entleeren von mit Schüttgut, insbesondere Schnittabak gefüllten Kartons, mit einem die oberseitig geöffneten Kartons durch ein Schwenkantriebsmittel von einer Zuführbahn zu einem Sammeltransporteur überführenden sowie die Kartons nach unten entleerenden Lastaufnahmemittel.

Ein Sammeltransporteur im Sinne der Erfindung kann auf unterschiedliche Weise ausgebildet sein, beispielsweise in Form eines stationären oder auf einer Palette verfahrbaren Behälters oder auch in Form eines mit einem Bodenband zum Austragen des Tabaks ausgestatteten Zusetzers und dergleichen mehr.

Der Erfindung liegt die Aufgabe zugrunde, bei den auf eingangs genannte Weise kopfüber entleerten Kartons die zwangsläufig auftretende Staubentwicklung auf ein erträgliches Maß zu reduzieren.

Diese Aufgabe wird erfindungsgemäß dadurch gelöst, daß beim Kippen der in eine Entleerungsstellung absenkbaren Kartons der Schnittabak in einer definierten Ausfallposition aufgefangen wird, aus der heraus er in den Sammeltransporteur freigegeben wird.
Eine bevorzugte Vorgehensweise zur Vorpositionierung und Freigabe des Tabaks besteht nach einem weiteren Vorschlag darin, daß die Kartons an ihrer offenen Oberseite überdacht und von der Zuführbahn abgehoben werden sowie durch eine 90°-Schwenkung zum Sammeltransporteur überführt, um 180° gekippt und in die Entleerungsstellung abgesenkt sowie von der Überdachung befreit werden. Zweckmäßigerweise werden gemäß einer zusätzlichen Weiterbildung die entleerten Kartons durch eine weitere 90°-Schwenkung auf einen Abförderer überführt.

Die Vorrichtung zur Durchführung des eingangs bezeichneten Verfahrens ist derart ausgebildet, daß das durch ein Drehantriebsmittel kippbare und durch ein Hubantriebsmittel in eine Entleerungsstellung absenkbare Lastaufnahmemittel mit einer die Kartonöffnung überdachenden bzw. freigebenden Verschlußeinrichtung ausgestattet ist.
Eine einen störungsfreien Tabakausfall gewährleistende Weiterbildung besteht darin, daß die Verschlußeinrichtung zwei durch ein Stellantriebsmittel gegensinnig verschwenkbare Auffangschaufeln aufweist.
Eine effektive, auf engem Raum einsetzbare Ausgestaltung besteht darin, daß das Lastaufnahmemittel Teil eines turmförmigen Manipulators ist, an dem das mit dem eine 180°-Kippung zulassenden Drehantriebsmittel ausgestattete Lastaufnahmemittel über das Hubantriebsmittel höhenverstellbar geführt und durch das Schwenkantriebsmittel in 90°-Schritten verschwenkbar gelagert ist.
Eine zweckmäßige Weiterbildung sieht vor, daß ein im Schwenkbereich des Manipulators im Winkel von 90° zum Sammeltransporteur verlaufender Abförderer vorgesehen ist, mit dessen Hilfe die entleerten Kartons auf wirtschaftliche Weise der Entsorgung zugeführt werden können.
Als die Handhabung der zu entleerenden Kartons erleichternde, zusätzliche Maßnahme wird außerdem vorgeschlagen, daß das Lastaufnahmemittel mit die geöffneten Deckellappen des Kartons abfaltenden bzw. an der Kartonwandung fixierenden Führungsstangen ausgestattet ist.

Als unterstützende Maßnahme beim Einsatz des Manipulators im Bereich der Zuführbahn ist außerdem vorgesehen, daß das Lastaufnahmemittel mit mittels eines Stellantriebes unter den Karton einschwenkbaren Stützrollen versehen ist.

Der mit der Erfindung erzielte Vorteil besteht darin, daß der nach dem Stürzen des Kartons zunächst zurückgehaltene Inhalt aus einer relativ geringen Fallhöhe auf den Boden des Sammeltransporteurs herausfällt, was sowohl die Staubentwicklung deutlich vermindert als auch die bruchanfälligen Tabakfasern schont.

Die Erfindung wird nachfolgend anhand eines in der Zeichnung dargestellten Ausführungsbeispiels näher erläutert.

Hierbei zeigen:
- Figur 1: eine Draufsicht auf die Gesamtanordnung einer Entleerungsvorrichtung,
- Figur 2: eine Seitenansicht auf die Entleerungsvorrichtung im Bereich der Zuführbahn in Richtung des Pfeils A gemäß Figur 1,
- Figur 3: vergrößert dargestellte Einzelheiten eines Lastaufnahmemittels eines Manipulators und

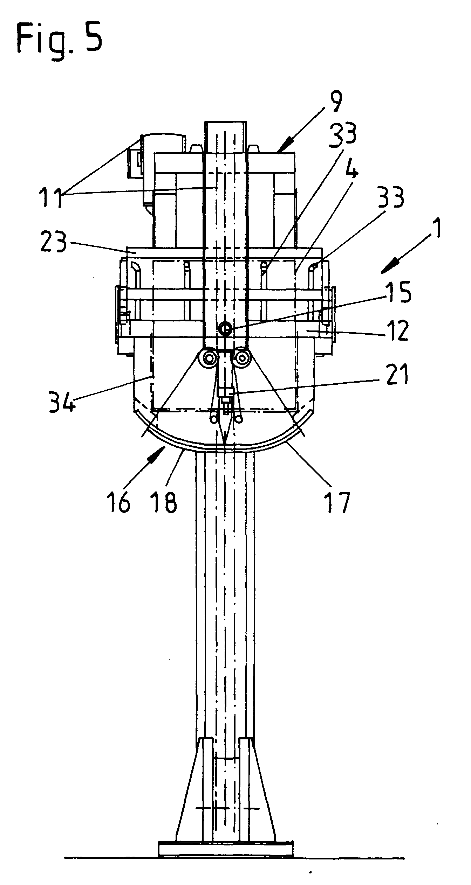

- Figuren 4 bis 6: unterschiedliche Arbeitsstellungen des Lastaufnahmemittels im Bereich des Sammeltransporteurs in Richtung des Pfeils B gemäß Figur 1

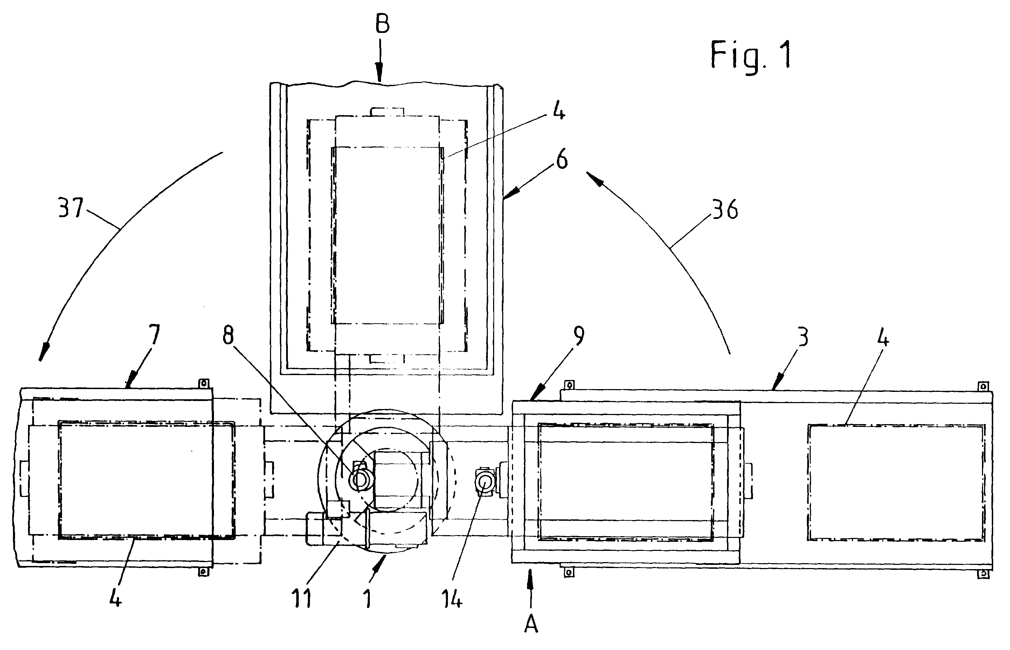

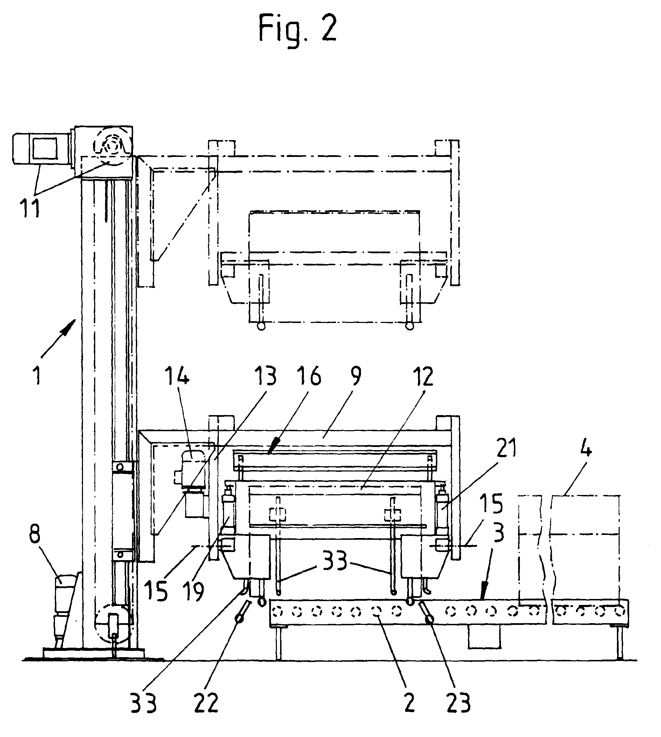

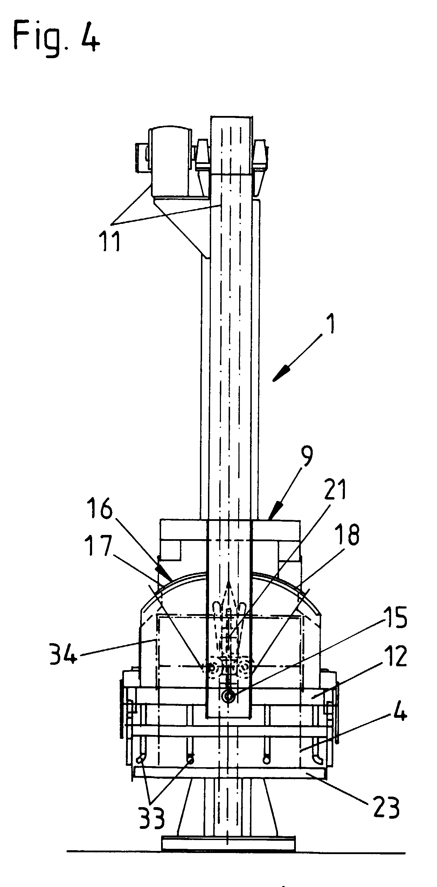

Gemäß den Figuren 1 und 2 sind im Schwenkbereich eines turmartigen Manipulators 1 eine Transportwalzen 2 aufweisende Zuführbahn 3 für Schnittabak enthaltende Kartons 3, ein sich im Winkel von 90° zur Zuführbahn 3 erstreckender, als mit einem beweglichen Bodenband versehene Tabakbox ausgebildeter Sammeltransporteur 6 sowie ein sich im Winkel von 90° zum Sammeltransporteur 6 erstreckender Abförderer 7 für leere Kartons 4 angeordnet.
Der mit Hilfe eines Schwenkantriebsmittels 8 in 90°-Schritten schwenkbare Manipulator 1 trägt ein Lastaufnahmemittel 9 für die Kartons 4, welches durch ein Hubantriebsmittel 11 an der Säule des Manipulators 1 höhenverfahrbar ist. Das Lastaufnahmemittel 9 weist ein Trägergestell 12 auf, welches mittels eines an einem Rahmen 13 des Lastaufnahmemittels 9 befestigten Drehantriebsmittels 14 um eine Achse 15 um 180° kippbar ist.
Das drehbare Trägergestell 12 des Lastaufnahmemittels 9 ist gemäß Figur 4 mit einer Verschlußeinrichtung 16 in Form von zwei Auffangschaufeln 17 und 18 versehen, die durch ein Stellantriebsmittel in Form von zwei pneumatischen oder hydraulischen Stellzylindern 19 und 21 gegensinnig verschwenkbar sind.

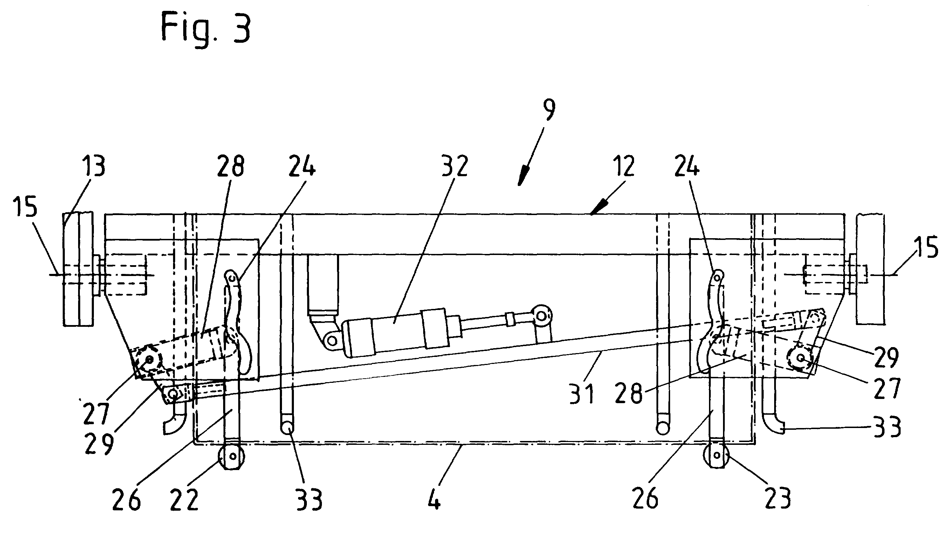

Das Trägergestell 12 ist gemäß Figur 3 darüber hinaus an gegenüberliegenden Seiten mit parallel zu den Transportwalzen 2 der Zuführbahn 3 verlaufenden Stützrollen 22 und 23 versehen, die jeweils am Ende eines in einer Steuerkurve 24 mittels einer Steuerrolle geführten Rollenhebels 26 angeordnet sind, welche ihrerseits mit einem um eine ortsfeste Achse 27 bewegbaren Schwenkhebel 28 gelenkig verbunden sind. Die Schwenkhebel 28 sind durch Lenker 29 mit einer Koppelstange 31 verbunden, an die ein als pneumatischer oder hydraulischer Stellzylinder ausgebildeter Stellantrieb 32 angreift.
Das Trägergestell 12 weist außerdem an allen Seiten Führungsstangen 33 zum Abfalten bzw. Anlegen der geöffneten Deckellappen 34 der Kartons 4 auf.

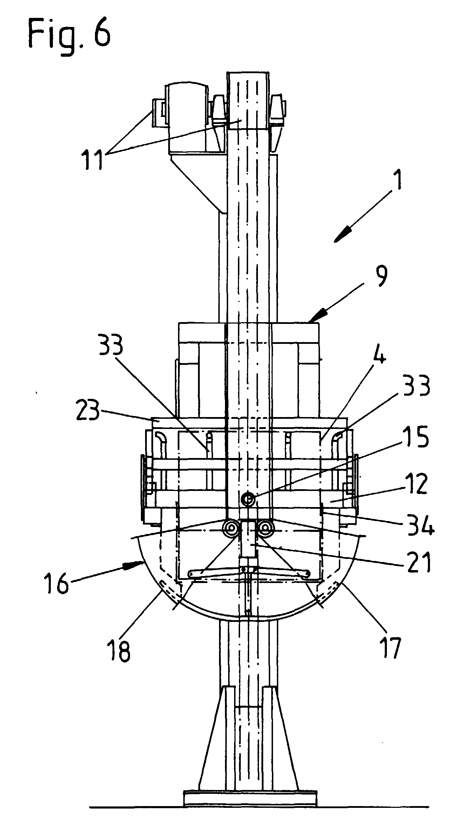

Die Wirkungsweise der Entleerungsvorrichtung ist wie folgt:
Aufeinanderfolgende mit Schnittabak gefüllte Kartons 4 werden auf den Transportwalzen 2 der Zuführbahn 3 zum Lastaufnahmemittel des Manipulators 1 vorbewegt. Der jeweils vordere Karton 4 wird unterhalb des angehobenen bzw. über der Zuführbahn 3 bereitstehenden Lastaufnahmemittels 9 positioniert. Anschließend bewegt das Hubantriebsmittel 11 das Lastaufnahmemittel 9 abwärts, wobei die Führungsstangen 33 des Trägergestells 12 die bereits geöffneten Deckellappen 34 des Kartons 4 nach unten abfalten und gegen die Kartonwände anlegen. Anschließend schwenken die Stützrollen 22 und 23 durch Aktivierung des Stellantriebs 32 gegenläufig einwärts unter den Boden des Kartons 4, der auf diese Weise von den Transportwalzen 2 abgehoben wird. Die obere Kartonöffnung wird überdacht von den geschlossen gehaltenen Auffangschaufeln 17 und 18 des Lastaufnahmemittels 9.
Anschließend fährt das Lastaufnahmemittel 9 mit dem Karton 4 durch Aktivierung des Hubantriebsmittels 11 in die obere, in Figur 2 strichpunktiert angedeutete Position. Durch Aktivierung des Schwenkantriebsmittels 8 schwenkt das Lastaufnahmemittel 9 mit dem Karton 4 um 90° in Richtung des Pfeils 36 gemäß Figur 1 über den Sammeltransporteur 6. Dort kippt das Drehantriebsmittel 14 das den Karton 4 aufnehmende Trägergestell 12 des Lastaufnahmemittels 9 kopfüber um 180°, so daß die Kartonöffnung nach unten kommt und der Schnittabak zunächst von den geschlossenen Auffangschaufeln 17 und 18 aufgefangen und zurückgehalten wird. Anschließend fährt das Hubantriebsmittel 11 das Lastauffnahmemittel 9 abwärts in die in Figur 6 gezeigte Position über dem Sammeltransporteur 6.

Die genannten Hub-, Schwenk- und Dreh- bzw. Kippbewegungen können aufeinanderfolgend oder insgesamt bzw. teilweise überlagert je nach den örtlichen Gegebenheiten ausgeführt werden.
Durch Betätigung der Stellantriebsmittel 21 werden die Auffangschaufeln 17 und 18 bei geringem Anstand über dem Boden bzw. Bodenband des Sammeltransporteurs 6 gegensinnig in ihre in Figur 6 gezeigte Öffnungsstellung verschwenkt, so daß der von ihnen gehaltene Schnittabak aus geringer Fallhöhe, d. h. bei reduzierter Staubentwicklung in den Sammeltransporteur freigegeben wird.
Anschließend schwenkt das Lastaufnahmemittel 9 mit dem leeren Karton 4 gemäß Figur 1 in Richtung des Pfeils 37 über den Abförderer 7, auf den der entleerte Karton 4 abgesetzt und abtransportiert wird.

## Patentansprüche

1. Verfahren zum Entleeren von mit Schüttgut, insbesondere Schnittabak gefüllten Kartons, welche in oberseitig geöffnetem Zustand von einer Zuführbahn zu einem Sammeltransporteur überführt und nach unten in diesen entleert werden, dadurch gekennzeichnet, daß beim Kippen der in eine Entleerungsstellung absenkbaren Kartons der Schnittabak in einer definierten Ausfallposition aufgefangen wird, aus der heraus er in den Sammeltransporteur freigegeben wird.

2. Verfahren nach Anspruch 1, dadurch gekennzeichnet, daß die Kartons an ihrer offenen Oberseite überdacht und von der Zuführbahn abgehoben werden sowie durch eine 90°-Schwenkung zum Sammeltransporteur überführt, um 180° gekippt und in die Entleerungsstellung abgesenkt sowie von der Überdachung befreit werden.

3. Verfahren nach Anspruch 1 oder 2, dadurch gekennzeichnet, daß die entleerten Kartons durch eine weitere 90°-Schwenkung auf einen Abförderer überführt werden.

4. Vorrichtung zum Entleeren von mit Schüttgut, insbesondere Schnittabak gefüllten Kartons, mit einem die oberseitig geöffneten Kartons durch ein Schwenkantriebsmittel von einer Zuführbahn zu einem Sammeltransporteur überführenden sowie die Kartons nach unten entleerenden Lastaufnahmemittel, dadurch gekennzeichnet, daß das durch ein Drehantriebsmittel (14) kippbare und durch ein Hubantriebsmittel (11) in eine Entleerungsstellung absenkbare Lastaufnahmemittel (9) mit einer die Kartonöffnung überdachenden bzw. freigebenden Verschlußeinrichtung (16) ausgestattet ist.

5. Vorrichtung nach Anspruch 4, dadurch gekennzeichnet, daß die Verschlußeinrichtung (16) zwei durch ein Stellantriebsmittel (19, 21) gegensinnig verschwenkbare Auffangschaufeln (17, 18) aufweist.

6. Vorrichtung nach Anspruch 4 oder 5, dadurch gekennzeichnet, daß das Lastaufnahmemittel (9) Teil eines turmförmigen Manipulators (1) ist, an dem das mit dem eine 180°-Kippung zulassenden Drehantriebsmittel (14) ausgestattete Lastaufnahmemittel über das Hubantriebsmittel (11) höhenverstellbar geführt und durch das Schwenkantriebsmittel (8) in 90°-Schritten verschwenkbar gelagert ist.

7. Vorrichtung nach Anspruch 6, dadurch gekennzeichnet, daß ein im Schwenkbereich des Manipulators (1) im Winkel von 90° zum Sammeltransporteur (6) verlaufender Abförderer (7) vorgesehen ist.

8. Vorrichtung nach Anspruch 4, dadurch gekennzeichnet, daß das Lastaufnahmemittel (9) mit die geöffneten Deckellappen (34) des Kartons (4) abfaltenden bzw. an der Kartonwandung fixierenden Führungsstangen (33) ausgestattet ist.

9. Vorrichtung nach Anspruch 4, dadurch gekennzeichnet, daß das Lastaufnahmemittel (9) mit mittels eines Stellantriebes (32) unter den Karton (4) einschwenkbaren Stützrollen (22, 23) versehen ist.
